## Europäisches Patentamt

## European Patent Office

## Office européen des brevets

(19)

(11) Veröffentlichungsnummer: **0 027 982**
**B2**

(12)

# NEUE EUROPÄISCHE PATENTSCHRIFT

(45) Veröffentlichungstag der neuen Patentschrift:
16.09.87

(51) Int. Cl.⁴: **C 07 F  9/38**

(21) Anmeldenummer: **80106363.7**

(22) Anmeldetag: **20.10.80**

(54) Verfahren zur Herstellung von 3-Amino-1-hydroxypropan-1,1-diphosphonsäure.

(30) Priorität: **27.10.79  DE 2943498**

(43) Veröffentlichungstag der Anmeldung:
**06.05.81 Patentblatt 81/18**

(45) Bekanntmachung des Hinweises auf die Patenterteilung:
**23.06.82 Patentblatt 82/25**

(45) Bekanntmachung des Hinweises auf die Entscheidung
über den Einspruch:
**16.09.87 Patentblatt 87/38**

(84) Benannte Vertragsstaaten:
**AT BE CH FR GB IT LI NL SE**

(56) Entgegenhaltungen:
**DE - A - 2 130 794**
**DE - A - 2 658 961**
**DE - A - 2 702 631**

**Beilsteins Handbuch, E III, H4, S.1263 (Springer 1963)**

(73) Patentinhaber: **Henkel Kommanditgesellschaft auf**
**Aktien, Postfach 1100 Henkelstrasse 67,**
**D-4000 Düsseldorf-Holthausen (DE)**

(72) Erfinder: **Blum, Helmut, Bertha-von-Suttner-Strasse 30,**
**D-4000 Düsseldorf (DE)**
Erfinder: **Worms, Karl-Heinz, Dr., An der Jagengrenze 5,**
**D-4000 Düsseldorf 13 (DE)**

## Beschreibung

Die Erfindung betrifft ein verbessertes Verfahren zur Herstellung von 3-Amino-1-hydroxypropan-1,1-diphosphonsäure, wobei die Aminogruppe durch niedere Alkylreste substituiert sein kann.

Aus der deutschen Offenlegungsschrift 2 130 794 ist es bekannt, 3-Amino-1-hydroxypropan-1,1-diphosphonsäure durch Umsetzung von β-Alanin oder Poly-β-Alanin mit einem Gemisch aus Phosphortrichlorid und phosphoriger Säure in Gegenwart oder in Abwesenheit eines organischen Verdünnungsmittels herzustellen. Bei dieser Umsetzung entstehen jedoch gelbrote Nebenprodukte in Form von amorphen Phosphorsauerstoffverbindungen unbekannter Struktur, deren Abtrennung vor allem in Gegenwart von Chlorbenzol sehr aufwendig ist. Bei der Herstellung von grösseren Mengen ist weiterhin zu berücksichtigen, dass diese Phosphorverbindungen gefährliche, leicht entzündliche Nebenprodukte darstellen.

Es ist weiterhin bekannt, zur Vermeidung dieser Nachteile 3-Amino-1-hydroxypropan-1,1-diphosphonsäure herzustellen, in dem man β-Alanin mit einem Gemisch aus phosphoriger Säure und $POCl_3$ umsetzt und das Reaktionsgemisch anschliessend hydrolysiert. Dieses Verfahren ist unter anderem in Hinblick auf die Ausbeuten nicht befriedigend (vgl. DE-A 2 702 631).

Es wurde nun gefunden, dass man die bisherigen Arbeitsweisen dadurch verbessern kann, in dem man sich des nachstehend beschriebenen Verfahrens bedient. Das neue Verfahren ist dadurch gekennzeichnet, dass man Poly-β-Alanin oder β-Alanin, wobei die Aminogruppen durch niedere Alkylreste substituiert sein können, mit einem Gemisch aus phosphoriger Säure und $PCl_5$ oder phosphoriger Säure, $PCl_3$ und Chlor umsetzt und das Reaktionsgemisch anschliessend hydrolysiert.

Als Ausgangsprodukt wird insbesondere β-Alanin verwendet. Beim Einsatz von Poly-β-Alanin, welches aus Acrylnitril und Ameisensäure entsteht, wird vorab zu β-Alanin hydrolysiert. Auch können als Ausgangsprodukte solche β-Alanine verwendet werden, deren an der Aminogruppe befindlichen Wasserstoffatome ganz oder teilweise durch niedere Alkylreste wie Methyl-, Ethyl- oder Propylgruppen ersetzt sind.

Es werden pro Mol β-Alanin 1,5 Mol $H_3PO_3$ und 1,5 Mol $PCl_5$ verwendet. Wie weiter gefunden wurde, kann $PCl_5$ auch durch ein Gemisch von $PCl_3$ und $Cl_2$ ersetzt werden. Führt man das Verfahren auf die zuletzt genannte Weise durch, so wird zunächst eine Mischung aus β-Alanin, $H_3PO_3$ und $PCl_3$ im Molverhältnis 1:1:1 hergestellt und dann eine entsprechende Menge Chlorgas eingeleitet.

Gewünschtenfalls können Verdünnungsmittel wie Chlorbenzol, Tetrachlorethan, Tetrachlorethylen, Trichlorethylen oder Tetrachlorkohlenstoff bei der Durchführung der Umsetzung Anwendung finden. Die Umsetzung erfolgt im allgemeinen bei Temperaturen zwischen 80 und 130°, vorzugsweise bei etwa 100°C. Anschliessend wird das Reaktionsgemisch durch Zugabe von Wasser hydrolysiert, wobei zweckmässigerweise soviel $H_2O$ zugegeben wird, bis das Reaktionsprodukt gerade gelöst ist. Das gewünschte Produkt kristallisiert dann, gegebenenfalls nach Abtrennung des Lösungsmittels, aus der wässrigen Lösung aus. Die Ausbeute lässt sich noch durch Abtrennen der Mutterlauge und Versetzen mit Alkohol oder Aceton steigern.

Die anfallenden, gegebenenfalls am Stickstoffatom alkylierten 3-Amino-1-hydroxypropan-1,1-diphosphonsäuren sind gute Komplexbildner, die auch in unterstöchiometrischen Mengen wirksam sind. Sie können daher in Reinigungs- oder Wasserbehandlungsmitteln Anwendung finden.

Beispiel 1

1,5 Mol $PCl_5$ wurde in 500 ml Chlorbenzol suspendiert und mit 1,5 Mol $H_3PO_3$ versetzt, wobei unter HCl-Entwicklung und exothermer Reaktion eine klare Lösung erhalten wurde. Nach Abkühlung auf Raumtemperatur wurde 1 Mol β-Alanin zugegeben. Nach 15minütigem Nachrühren wurde innerhalb einer Stunde auf 100°C aufgeheizt und 3 Stunden bei dieser Temperatur belassen. Das nach dieser Zeit vorliegende Reaktionsgemisch wurde mit 600 ml $H_2O$ hydrolysiert, wobei das praktisch feste Produkt vollständig gelöst wurde. Nach Abtrennen der Chlorbenzolphase wurden durch Auskristallisation aus der abgekühlten Lösung 65,1% reine 3-Amino-1-hydroxypropan-1,1-diphosphonsäure erhalten. Die Ausbeute kann noch durch Versetzen der Lösung mit Methanol gesteigert werden.

Beispiel 2

Eine Suspension von 0,345 Mol $PCl_5$ in 120 ml Chlorbenzol wurde zuerst mit 0,345 Mol $H_3PO_3$ und nach dem Abkühlen mit 0,23 Mol N,N-Diethylaminopropionsäure versetzt. Es wurde 10 Minuten nachgerührt und dann langsam auf 10°C erhitzt und das Reaktionsgemisch dann noch 3 Stunden bei dieser Temperatur belassen. Danach wurde die Chlorbenzolphase abdekantiert und das pastenartige Reaktionsprodukt mit zirka 80 ml $H_2O$ hydrolysiert.

Die 3-(N,N-Diethylamino)-1-hydroxypropan-1,1-diphosphonsäure wurde durch Eintropfen der Lösung in ein Alkohol-Aceton-Gemisch (2/1) ausgefällt.

Beispiel 3

In eine bei Raumtemperatur hergestellte Mischung von β-Alanin, $H_3PO_3$ und $PCl_3$ im Molverhältnis 1:1:1 in 500 ml Chlorbenzol wurde 2½ Stunden Chlorgas eingeleitet. Anschliessend wurde die Reaktionsmischung auf 100°C aufgeheizt und noch 4 Stunden bei dieser Temperatur nacherhitzt. Nach dem Abkühlen wurde mit zirka 400 ml $H_2O$ bei 50°C hydrolysiert, die Chlorbenzolphase abgetrennt und weiterem Abkühlen auf 0 bis 10°C die 3-Amino-1-hydroxypropan-1,1-diphosphonsäure auskristallisiert. Die Ausbeute betrug 72%.

## Patentanspruch

Verfahren zur Herstellung von 3-Amino-1-hydroxypropan-1,1-diphosphonsäure beziehungsweise deren in der Aminogruppe durch $C_{1-3}$-Alkylreste substituierten Derivaten, durch Umsetzung von Poly-β-Alanin oder β-Alanin beziehungsweise der entsprechenden in der Aminogruppe durch $C_{1-3}$-Alkylreste substituierten Verbindungen mit Phosphoriger Säure und einem Phosphorhalogenid, dadurch gekennzeichnet, dass man die Umsetzung mit
a) Phosphoriger Säure und $PCl_5$ oder
b) Phosphoriger Säure, $PCl_3$ und Chlor
durchführt, wobei man die Reaktionspartner in folgenden Mischverhältnissen umsetzt:
a) β-Alanin:
Phosphoriger Säure: $PCl_5$ = 1:1,5:1,5
b) β-Alanin:
Phosphoriger Säure: $PCl_3/Cl_2$ = 1:1:1
und das Reaktionsprodukt anschliessend hydrolysiert.

## Claim

A process for the production of 3-amino-1-hydroxypropane-1,1-diphosphonic acid or derivatives thereof substituted in the amino group by $C_{1-3}$ alkyl radicals by reaction of poly-β-alanine or β-alanine or the corresponding compounds substituted in the amino group by $C_{1-3}$ alkyl radicals with phosphorous acid and a phosphorous halide, characterized in that the reaction is carried out with
a) phosphorous acid and $PCl_5$ or
b) phosphorous acid, $PCl_3$ and chlorine,
the reactants being reacted in the following molar rations:
a) β-alanine: phosphorous acid: $PCl_5$ = 1:1.5:1.5
b) β-alanine:
phosphorous acid: $PCl_3/Cl_2$ = 1:1:1,
and the reaction product is subsequently hydrolyzed.

## Revendication

Procédé de préparation de l'acide 3-amino-1-hydroxypropane-1,1-diphosphonique, ou de ses dérivés substitués sur le groupe amino par des groupes alkyles en $C_{1-3}$, par réaction de poly-β-alanine ou de β-alanine, ou bien des composés correspondants substitués sur le group amino par des restes alkyles en $C_{1-3}$, avec l'acide phosphoreux et un halogénure de phosphore, caractérisé en ce que, l'on met en œuvre la réaction avec
a) l'acide phosphoreux et $PCl_5$ ou
b) l'acide phosphoreux, $PCl_3$ et le chlore,
en faisant réagir les partenaires de réaction dans les proportions molaires suivantes:
a) β-alanine:
acide phosphoreux: $PCl_5$ = 1:1,5:1,5
b) β-alanine:
acide phosphoreux: $PCl_3/Cl_2$ = 1:1:1
et on hydrolyse ensuite le mélange de réaction.